# FASCICULE DE BREVET EUROPEEN

(11) **EP 1 370 047 B1**
(45) Date de publication et mention de la délivrance du brevet: **03.09.2008**
(21) Numéro de dépôt: 03290298.3
(22) Date de dépôt: 06.02.2003
(51) Int. Cl.: H04L 29/06

(54) **Procédé et dispositif de transmission de données sur un aéronef**
Verfahren und Vorrichtung zur Datenübertragung in einem Flugzeug
Method and apparatus for data transmission in an aicraft

(30) Priorité: 15.04.2002 FR 0204671
(43) Date de publication de la demande: 10.12.2003
(73) Titulaire: AIRBUS France, 31060 Toulouse (FR)
(72) Inventeur: Bernard, Denys, 31480 Pelleport (FR)
(74) Mandataire: Hauer, Bernard

(56) Documents cités:
- REA J: "Boeing 777 High Lift Control System" AEROSPACE AND ELECTRONICS CONFERENCE, 1993. NAECON 1993., PROCEEDINGS OF THE IEEE 1993 NATIONAL DAYTON, OH, USA 24-28 MAY 1993, NEW YORK, NY, USA,IEEE, US, 24 mai 1993 (1993-05-24), pages 476-483, XP010115987 ISBN: 0-7803-1295-3
- F.HALSALL: "DATA COMMUNICATIONS, COMPUTER NETWORKS AND OPEN SYSTEMS" 1996, ADDISON-WESLEY , US , XP002220023 * alinéa [12.3] *
- A.S.TANENBAUM: "COMPUTER NETWORKS" 1996, PRENTICE-HALL , US , XP002220024 * alinéa [03.2] *

## Description

La présente invention concerne un procédé et un dispositif de transmission de données sur un aéronef.

On sait que la plupart des aéronefs actuellement en service, notamment les avions de transport civil, sont équipés de dispositifs électroniques embarqués, notamment des calculateurs, dits "de type avionique". Ces dispositifs électroniques sont utilisés, notamment, pour des fonctions stratégiques du vol de l'aéronef telles que les commandes de vol. Ces dispositifs doivent, par conséquent, présenter un niveau de fiabilité très élevé, apte à garantir un taux de défaillance de l'aéronef inférieur à celui exigé par les autorités de certification. Les réseaux de communication et les liaisons entre de tels dispositifs (calculateurs) embarqués de type avionique doivent répondre aux mêmes exigences de fiabilité.

Certains avions de transport modernes, tels que les avions de type "Airbus A340-600" et "Airbus A318" par exemple, comportent également des équipements embarqués dits "monde ouvert" ("open world" en anglais), lesquels ne sont pas spécifiques aux applications aéronautiques. Ces équipements "monde ouvert" sont des moyens d'interface (de type "homme-machine") à la disposition d'un opérateur, en particulier un pilote, de l'avion. A titre d'exemple non limitatif, on peut citer des calculateurs dits industriels, des ordinateurs portables, des imprimantes, ... Ces équipements "monde ouvert" présentent un niveau de fiabilité plus faible que celui des dispositifs précités de type avionique. Ils présentent néanmoins l'avantage d'être beaucoup moins chers que ces derniers et leur niveau de fiabilité est suffisant pour des applications qui ne sont pas directement liées à des manoeuvres de l'avion, telles que par exemple la consultation d'une documentation de maintenance ou l'aide au diagnostic pour la maintenance. Lorsqu'un avion comporte des moyens d'interface de type monde ouvert, il est parfois intéressant de pouvoir utiliser un ou plusieurs de ces moyens d'interface, pour permettre à un opérateur d'échanger des informations avec des dispositifs de type avionique. Cela peut notamment être utile, dans le cadre d'opérations de maintenance de l'avion, pour consulter des valeurs de paramètres disponibles dans des dispositifs de type avionique ou pour tester certains composants de l'avion (par exemple : circuits électriques, gouvernes, etc...) dont la manoeuvre est commandée par de tels dispositifs de type avionique.

Toutefois, même si ces opérations de maintenance présentent un caractère de criticité moindre que celui des phases de vol de l'avion, le niveau de fiabilité desdits moyens d'interface de type monde ouvert peut ne pas être suffisant dans certains cas. Ainsi, à titre d'exemple, lorsqu'une opération de maintenance implique la manoeuvre d'une gouverne, il est impératif que cette dernière ne se déclenche pas de façon intempestive, puisqu'un déclenchement intempestif pourrait être dangereux pour des personnels se trouvant à proximité de ladite gouverne.

Par conséquent, il est généralement fortement déconseillé, notamment pour des raisons de fiabilité et donc de sécurité, de mettre en oeuvre sur un aéronef une transmission de données sensibles entre un dispositif de type avionique, tel que décrit précédemment, et un moyen d'interface de type précité.

Le document "Boeing 777 High Lift Control System", J. Rea, AEROSPACE AND ELECTRONICS CONFERENCE, 1993, NAECON 1993, pages 476-483, décrit un système d'avionique et de communications.

La présente invention a pour objet de remédier à ces inconvénients. Elle concerne un procédé permettant de réaliser une transmission de données particulièrement fiable sur un aéronef, entre au moins un dispositif de type avionique et au moins un moyen d'interface (de type "monde ouvert") qui est à la disposition d'un opérateur dudit aéronef, ledit dispositif et ledit moyen d'interface étant susceptibles d'être reliés ensemble par l'intermédiaire d'une liaison de transmission de données.

A cet effet, selon l'invention, ledit procédé est remarquable en ce que, pour transmettre au moins une valeur numérique :
a) on forme un message textuel correspondant à ladite valeur numérique ;
b) on transmet ledit message textuel par l'intermédiaire de ladite liaison de transmission de données ;
c) on analyse ledit message textuel transmis, pour détecter une éventuelle anomalie dudit message textuel transmis ; et
d) au moins si on ne détecte aucune anomalie à l'étape c), on traite ledit message textuel transmis.

Ainsi :
- comme grâce à l'invention, on transmet, non pas directement la valeur numérique que l'on désire transmettre, mais un message textuel précisé ci-dessous qui correspond à cette valeur numérique ; et
- comme une erreur de transmission d'un tel message textuel peut être détectée facilement et de façon fiable, tel que précisé ci-dessous,
on peut détecter la plupart des anomalies dans la transmission de données entre ledit dispositif de type avionique et ledit moyen d'interface, ce qui permet de réaliser une transmission de données particulièrement fiable, et ceci dans les deux sens. Le risque pour la sécurité est donc très faible.

En outre, avantageusement, pour transmettre au moins une valeur numérique dudit dispositif de type avionique vers ledit moyen d'interface :
- ledit dispositif calcule automatiquement, à l'étape a), le message textuel correspondant à ladite valeur numérique ; et/ou
- ledit moyen d'interface affiche tel quel, à l'étape d), ledit message textuel transmis. Dans ce cas, de préférence, l'opérateur doit effectuer une opération de validation s'il a correctement reçu ce message textuel ; et/ou
- ledit moyen d'interface analyse automatiquement à l'étape c) ledit message textuel transmis et, s'il détecte une anomalie à cette étape c), il affiche à l'étape d) un message d'erreur.

Par ailleurs, de façon avantageuse, pour transmettre au moins une valeur numérique dudit moyen d'interface vers ledit dispositif, à l'étape a), un opérateur saisit dans ledit moyen d'interface :
- directement le message textuel ; ou
- simplement ladite valeur numérique. Dans ce cas :
   . ledit moyen d'interface affiche le message textuel correspondant à cette valeur numérique saisie, qu'il compte transmettre ; et
   . ledit opérateur doit effectuer une opération de validation pour que ledit moyen d'interface transmette ce message textuel.

De plus, avantageusement, lors de la transmission d'au moins une valeur numérique dudit moyen d'interface vers ledit dispositif, à l'étape d) :
- si aucune anomalie n'a été détectée à l'étape c), ledit dispositif convertit automatiquement ledit message textuel transmis en une valeur numérique correspondante ;
- sinon (détection d'une anomalie), il renvoie un message textuel au moyen d'interface, destiné à avertir un opérateur de l'anomalie.

En outre, de façon avantageuse, en variante, à l'étape a) :
α) le moyen d'interface affiche un ordre d'émission de l'opérateur, relatif à l'émission d'une valeur numérique ;
β) l'opérateur est invité à valider ou à annuler cet ordre ; et
γ) s'il valide l'ordre, il est invité à saisir une valeur de confirmation et à confirmer cette saisie pour que l'ordre soit émis.

Dans ce cas, de préférence, à l'étape α) précitée, le moyen d'interface affiche, en ce qui concerne l'ordre d'émission, simultanément la valeur numérique et le message textuel correspondant. Ainsi, si l'opérateur saisit la valeur numérique, le moyen d'interface affiche également le message textuel correspondant, et si l'opérateur saisit le message textuel, le moyen d'interface affiche également la valeur numérique. Ceci permet de garantir que la validation a bien été faite volontairement par l'opérateur.

Par ailleurs, dans un mode de réalisation particulier, pour transmettre au moins une valeur numérique dudit moyen d'interface vers ledit dispositif :
- un opérateur entre la valeur numérique dans le moyen d'interface et ledit moyen d'interface calcule le message textuel correspondant ;
- ledit moyen d'interface transmet ce message textuel au dispositif ;
- ledit dispositif analyse ledit message textuel transmis ; et
- si ledit dispositif ne détecte aucune anomalie, il envoie un message de validation audit moyen d'interface qui l'affiche.

En outre, dans un autre mode de réalisation particulier, pour transmettre au moins une valeur numérique dudit moyen d'interface vers ledit dispositif :
- un opérateur entre la valeur numérique dans le moyen d'interface qui la transmet au dispositif ;
- ledit dispositif calcule le message textuel correspondant à la valeur numérique reçue ;
- ledit dispositif transmet ce message textuel au moyen d'interface qui l'affiche ; et
- si le message textuel affiché correspond à la valeur numérique entrée initialement par l'opérateur, ce dernier effectue une opération de validation destinée à informer ledit dispositif que la valeur numérique reçue est correcte.

Selon l'invention, pour transmettre ledit message textuel à l'étape b), successivement :
b1) on code ledit message textuel en un message numérique correspondant ;
b2) on transmet ledit message numérique, par l'intermédiaire de ladite liaison de transmission de données de type numérique ; et
b3) on décode le message numérique ainsi transmis pour former ledit message textuel transmis.

Ainsi, grâce à l'invention, on utilise la liaison de transmission de données usuelle de type numérique pour transmettre le message textuel (qui est codé à cet effet numériquement).

En outre, pour former le message textuel correspondant à ladite valeur numérique :
- dans un premier mode de réalisation, on transforme chaque chiffre de ladite valeur numérique individuellement en un équivalent textuel, le message textuel correspondant alors à la suite desdits équivalents textuels ; et
- dans un second mode de réalisation, on transforme ladite valeur numérique dans son ensemble en un équivalent textuel qui représente alors ledit message textuel.

La présente invention concerne également un système de transmission de données sur un aéronef, du type comportant :
- au moins un dispositif de type avionique ;
- au moins un moyen d'interface de type "monde ouvert", à la disposition d'un opérateur ; et
- au moins une liaison de transmission de données, qui est susceptible de relier ensemble ledit dispositif et ledit moyen d'interface.

Selon l'invention, ledit système est remarquable en ce que ledit dispositif et ledit moyen d'interface sont formés pour transmettre toute valeur numérique sous forme d'un message textuel correspondant, et en ce que ledit dispositif comporte au moins un moyen pour réaliser automatiquement, dans les deux sens, la conversion entre une valeur numérique et le message textuel correspondant et au moins un moyen pour détecter automatiquement une anomalie d'un message textuel transmis.

Ainsi, pour obtenir, à partir d'un système existant (peu fiable), un système de transmission de données conforme à l'invention qui est particulièrement fiable, il n'est pas nécessaire selon l'invention de beaucoup modifier ledit système existant, ce qui permet notamment de réduire le coût.

De préférence, ledit moyen d'interface comporte un moyen d'affichage et un moyen de saisie de données alphanumériques.

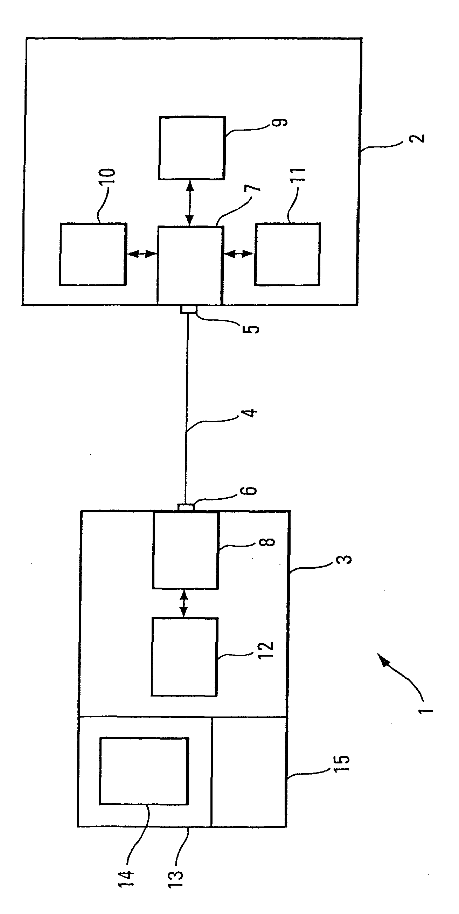

L'unique figure du dessin annexé fera bien comprendre comment l'invention peut être réalisée. Cette figure unique représente le schéma synoptique d'un système de transmission de données conforme à l'invention.

Le système 1 conforme à l'invention et représenté schématiquement sur la figure est destiné à la transmission de données sur un aéronef non représenté, en particulier un avion de transport civil.

Plus précisément, ledit système 1 est du type comportant au moins :
- un dispositif électronique 2 de type avionique, notamment un calculateur, par exemple un calculateur de commande de vol, qui est monté à poste fixe sur l'aéronef et qui présente un niveau de fiabilité très élevé, apte à garantir un taux de défaillance de l'aéronef inférieur à celui exigé par les autorités de certification ;
- un moyen d'interface 3, par exemple un ordinateur portable, qui est à la disposition d'un opérateur de l'aéronef, qui est de type "monde ouvert", qui est également embarqué sur l'aéronef et qui présente une fiabilité réduite de manière à ne pas garantir généralement le taux de défaillance exigé par les autorités de certification de l'aéronef ; et
- une liaison de transmission de données 4, de type usuel, susceptible d'être connectée par des moyens de connexion 5 et 6 usuels prévus à ses extrémités, respectivement, au dispositif 2 et au moyen d'interface 3, de manière à relier ensemble ces derniers et à permettre la mise en oeuvre d'une transmission de données entre eux.

Par ailleurs, ledit dispositif 2 et ledit moyen d'interface 3 comportent également, chacun, un moyen de codage/décodage 7, 8 usuel, pour coder sous forme numérique une valeur avant de la transmettre (et bien entendu pour décoder une valeur reçue).

Avec un tel système de type usuel, sans les caractéristiques avantageuses conformes à la présente invention, qui sont présentées ci-dessous, une transmission de données numériques entre le dispositif 2 et le moyen d'interface 3 présente une fiabilité réduite, insuffisante notamment pour transmettre des informations concernant directement les commandes de l'aéronef, en raison de la fiabilité réduite dudit moyen d'interface 3. En effet, si une erreur apparaît dans la transmission d'une valeur, suite à un problème au niveau dudit moyen d'interface 3 à fiabilité réduite, on n'est pas en mesure de la détecter. A titre d'illustration, on peut citer la transmission d'un paramètre dont la valeur numérique est, par exemple, égale à "2". Sous forme numérique, ce paramètre peut être codé (à l'aide dudit moyen 7 ou dudit moyen 8) sous forme d'un octet dont la représentation binaire est 00000010. Si une perturbation vient modifier la valeur de l'un des bits de cet octet, la valeur transmise par l'intermédiaire de la liaison 4 (dans l'un des deux sens) peut, par exemple, être 00000011 qui représente la valeur "3". Dans la mesure où cette valeur "3" (très proche de la valeur "2" à transmettre) est tout à fait plausible pour ce paramètre, rien (avec un système de transmission de données de type usuel) ne permet de détecter cette erreur de transmission.

Pour remédier à ces inconvénients et obtenir un système de transmission de données 1 particulièrement fiable, selon l'invention :
- ledit dispositif 2 et ledit moyen d'interface 3 sont formés pour transmettre toute valeur numérique sous forme d'un message textuel correspondant ; et
- ledit dispositif 2 comporte au moins un moyen de calcul 9 associé audit moyen 7 pour réaliser automatiquement, dans les deux sens, la conversion entre une valeur numérique et le message textuel correspondant, et au moins un moyen de détection 10 associé audit moyen 7 pour détecter automatiquement une anomalie d'un message textuel transmis.

Plus précisément, selon l'invention, pour transmettre au moins une valeur numérique :
a) on forme un message textuel correspondant à ladite valeur numérique ;
b) on transmet ledit message textuel par l'intermédiaire de ladite liaison 4 de transmission de données ;
c) on analyse ledit message textuel transmis, pour détecter une éventuelle anomalie dudit message textuel transmis ; et
d) au moins si on ne détecte aucune anomalie à l'étape c), on traite ledit message textuel transmis.

Par conséquent, en reprenant l'exemple précité selon lequel on veut transmettre (du dispositif 2 au moyen d'interface 3, ou inversement) une valeur numérique égale à "2", on forme (par exemple automatiquement par le moyen de calcul 9 dans le cas d'une transmission du dispositif 2 vers le moyen d'interface 3) un message textuel correspondant à ladite valeur numérique "2". Ce message textuel peut par exemple être "DEUX" ou "TWO" (en anglais).

Ce message textuel est alors codé, par le moyen 8 ou le moyen 7. Dans le cas du message textuel "TWO", en utilisant le code ASCII ("American Standard Code for Information Interchange") par exemple, ledit message textuel est transformé de manière à comporter les trois octets suivants : 01010100, 01010111, 01001111. Si une anomalie vient modifier la valeur de l'un des bits du troisième octet lors de la transmission de ce message textuel, le troisième octet reçu peut, par exemple, être 01001110 qui représente la lettre "N". Le message textuel reçu est alors "TWN", lequel n'a aucune signification pour le paramètre considéré. Il est alors possible de détecter facilement cette anomalie dans la transmission des données.

Ainsi :
- comme grâce à l'invention, on transmet, non pas directement la valeur numérique ("2") que l'on désire transmettre, mais un message textuel ("DEUX" ou "TWO") correspondant à cette valeur numérique ("2") ; et
- comme une erreur de transmission d'un tel message textuel ("DEUX" ou "TWO") peut être détectée facilement et de façon fiable,
on peut détecter la plupart des anomalies dans la transmission de données entre ledit dispositif 2 de type avionique et ledit moyen d'interface 3, ce qui permet de réaliser une transmission de données particulièrement fiable, et ceci dans les deux sens. Le risque pour la sécurité est donc très faible.

Selon l'invention, pour former le message textuel correspondant à ladite valeur numérique :
- dans un premier mode de réalisation, on transforme chaque chiffre de ladite valeur numérique individuellement en un équivalent textuel, le message textuel correspondant alors à la suite desdits équivalents textuels. Par exemple, la valeur numérique "259" peut être transformée ainsi dans le message textuel "DEUX CINQ NEUF" ou "TWO FIVE NINE" (en anglais) ; et
- dans un second mode de réalisation, on transforme ladite valeur numérique dans son ensemble en un équivalent textuel qui représente alors ledit message textuel. Par exemple, la valeur numérique "259" peut être transformée, dans ce second mode de réalisation, dans le message textuel "DEUX CENT CINQUANTE NEUF" ou "TWO HUNDRED FIFTY NINE" (en anglais). Le nombre de symboles (caractères) transmis étant plus élevé dans ce second mode de réalisation, il en résulte que le taux de détection d'erreurs ou d'anomalies est encore plus élevé que dans le cas dudit premier mode de réalisation.

On notera par ailleurs que les moyens 7 et 8 de codage/décodage peuvent utiliser, dans le cadre de la présente invention, au lieu du code ASCII précité, d'autres codes connus, tels que le code EBCDIC ou le code ANSI par exemple.

Dans le cas d'une transmission de données du moyen d'interface 3 vers le dispositif 2, toute anomalie dans le message textuel transmis est détectée, de façon automatique, par ledit moyen de détection 10 du dispositif 2.

Dans ce cas :
- si aucune anomalie n'est détectée par le moyen 10, le moyen 9 du dispositif 2 convertit automatiquement le message textuel (par exemple "TWO") transmis par l'intermédiaire de la liaison 4 en une valeur numérique correspondante ("2" dans l'exemple précité) ; et
- si le moyen 10 détecte une anomalie dans le message textuel ("TWN" par exemple) transmis, le dispositif 2 renvoie, à l'aide d'un moyen 11 approprié, via ladite liaison 4, une information textuelle audit moyen d'interface 3, destinée à avertir un opérateur de l'anomalie. L'opérateur peut alors éventuellement tenter un nouvel envoi de cette valeur numérique.

En revanche, dans le cas d'une transmission en sens inverse (du dispositif 2 vers le moyen d'interface 3), ladite anomalie peut être détectée au niveau du moyen d'interface 3 :
- automatiquement par un moyen de détection 12 qui est intégré dans ledit moyen d'interface 3 et qui est similaire audit moyen de détection 10 ; et/ou
- visuellement par un opérateur. A cet effet, le moyen d'interface 3 comporte un moyen d'affichage 13, de type usuel, qui affiche automatiquement sur un écran 14 le message textuel transmis, tel qu'il a été reçu du dispositif 2.

On peut prévoir de plus que l'opérateur ait à effectuer une opération de validation s'il a correctement reçu ce message textuel.

Ledit moyen d'affichage 13 affiche également sur l'écran 14, le cas échéant, une information textuelle provenant du moyen 11, pour prévenir l'opérateur d'une anomalie, telle que précitée.

On notera que, selon l'invention, pour transmettre au moins une valeur numérique dudit dispositif 2 vers ledit moyen d'interface 3, ledit moyen de calcul 9 du dispositif 2 calcule automatiquement [à l'étape a) précitée] le message textuel correspondant à ladite valeur numérique.

Par ailleurs, pour transmettre au moins une valeur numérique dudit moyen d'interface 3 vers ledit dispositif 2, un opérateur saisit à l'aide d'un moyen de saisie de données 15, de préférence un clavier alphanumérique, qui est associé audit (ou intégré dans ledit) moyen d'interface 3 :
- directement le message textuel dans ledit moyen d'interface 3 ; ou
- simplement ladite valeur numérique. Dans ce cas, dans un mode de réalisation particulier :
   . ledit moyen d'interface 3 affiche sur l'écran 14 le message textuel correspondant qu'il compte transmettre ; et
   . ledit opérateur doit effectuer une opération de validation, par exemple à l'aide du moyen 15 ou d'un moyen spécifique non représenté, pour que ledit moyen d'interface 3 transmette ce message textuel.

Dans un autre mode de réalisation (préféré), pour transmettre une valeur numérique du moyen d'interface 3 vers le dispositif 2, à l'étape a) précitée :
α) le moyen d'interface 3 affiche sur l'écran 14 un ordre d'émission de l'opérateur, relatif à l'émission de ladite valeur numérique ;
β) l'opérateur est invité à valider ou à annuler cet ordre, par exemple à l'aide du moyen 15 ; et
γ) s'il valide l'ordre, il est invité à saisir une valeur de confirmation et à confirmer cette saisie (par exemple également à l'aide dudit moyen 15) pour déclencher la transmission de ladite valeur numérique.

Dans ce cas, de préférence, à ladite étape α), le moyen d'interface 3 affiche sur l'écran 14, en ce qui concerne l'ordre d'émission, simultanément la valeur numérique et le message textuel correspondant. Ainsi, si l'opérateur saisit la valeur numérique, le moyen d'interface 3 affiche également le message textuel correspondant, et si l'opérateur saisit le message textuel, le moyen d'interface 3 affiche également la valeur numérique. Ceci permet de garantir que la validation a bien été faite volontairement par l'opérateur.

Par ailleurs, dans un mode de réalisation particulier, pour transmettre au moins une valeur numérique dudit moyen d'interface 3 vers ledit dispositif 2:
- un opérateur entre la valeur numérique dans le moyen d'interface 3 et ledit moyen d'interface 3 calcule le message textuel correspondant ;
- ledit moyen d'interface 3 transmet ce message textuel au dispositif 2 ;
- ledit dispositif 2 analyse ledit message textuel transmis ; et
- si ledit dispositif 2 ne détecte aucune anomalie, il envoie un message de validation audit moyen d'interface 3 qui l'affiche.

En outre, dans un autre mode de réalisation particulier, pour transmettre au moins une valeur numérique dudit moyen d'interface 3 vers ledit dispositif 2 :
- un opérateur entre la valeur numérique dans le moyen d'interface 3 qui la transmet au dispositif 2 ;
- ledit dispositif 2 calcule le message textuel correspondant à la valeur numérique reçue ;
- ledit dispositif 2 transmet ce message textuel au moyen d'interface 3 qui l'affiche ; et
- si le message textuel affiché correspond à la valeur numérique entrée initialement par l'opérateur, ce dernier effectue une opération de validation destinée à informer ledit dispositif 2 que la valeur numérique reçue est correcte.

## Revendications

1. Procédé de transmission de données sur un aéronef entre au moins un dispositif (2) de type avionique et au moins un moyen d'interface (3) qui est à la disposition d'un opérateur dudit aéronef, ledit dispositif (2) et ledit moyen d'interface (3) étant susceptibles d'être reliés ensemble par l'intermédiaire d'au moins une liaison de transmission de données (4),
**caractérisé en ce que**, pour transmettre au moins une valeur numérique :
a) on forme un message textuel correspondant à ladite valeur numérique ;
b) on transmet ledit message textuel par l'intermédiaire de ladite liaison de transmission de données (4) ;
c) on analyse ledit message textuel transmis, pour détecter une éventuelle anomalie dudit message textuel transmis ; et
d) au moins si on ne détecte aucune anomalie à l'étape c), on traite ledit message textuel transmis.

2. Procédé selon la revendication 1,
**caractérisé en ce que**, pour transmettre au moins une valeur numérique dudit dispositif (2) vers ledit moyen d'interface (3), ledit dispositif (2) calcule automatiquement, à l'étape a), le message textuel correspondant à ladite valeur numérique.

3. Procédé selon l'une des revendications 1 et 2,
**caractérisé en ce que**, lors de la transmission d'au moins une valeur numérique dudit dispositif (2) vers ledit moyen d'interface (3), ledit moyen d'interface (3) affiche tel quel à l'étape d) ledit message textuel transmis.

4. Procédé selon la revendication 3,
**caractérisé en ce que** l'opérateur doit effectuer une opération de validation s'il a correctement reçu ce message textuel.

5. Procédé selon l'une des revendications 1 à 4,
**caractérisé en ce que**, lors de la transmission d'au moins une valeur numérique dudit dispositif (2) vers ledit moyen d'interface (3), ledit moyen d'interface (3) analyse automatiquement, à l'étape c), ledit message textuel transmis et, s'il détecte une anomalie à cette étape c), il affiche à l'étape d) un message d'erreur.

6. Procédé selon l'une quelconque des revendications 1 à 5,
**caractérisé en ce que**, pour transmettre au moins une valeur numérique dudit moyen d'interface (3) vers ledit dispositif (2), à l'étape a), un opérateur saisit directement ledit message textuel dans ledit moyen d'interface (3).

7. Procédé selon l'une quelconque des revendications 1 à 5,
**caractérisé en ce que**, pour transmettre au moins une valeur numérique dudit moyen d'interface (3) vers ledit dispositif (2), à l'étape a) :
- un opérateur saisit ladite valeur numérique dans ledit moyen d'interface (3) ;
- ledit moyen d'interface (3) affiche le message textuel correspondant qu'il compte transmettre ; et
- ledit opérateur doit effectuer une opération de validation pour que ledit moyen d'interface (3) transmette ce message textuel.

8. Procédé selon l'une quelconque des revendications 1 à 5,
**caractérisé en ce que**, pour transmettre au moins une valeur numérique dudit moyen d'interface (3) vers ledit dispositif (2), à l'étape a) :
α) ledit moyen d'interface (3) affiche un ordre d'émission de l'opérateur, relatif à l'émission de ladite valeur numérique ;
(β) l'opérateur est invité à valider ou à annuler cet ordre ; et
γ) s'il valide l'ordre, il est invité à saisir une valeur de confirmation et à confirmer cette saisie pour que l'ordre soit émis.

9. Procédé selon la revendication 8,
**caractérisé en ce qu'**à l'étape α), le moyen d'interface affiche, en ce qui concerne l'ordre d'émission, simultanément la valeur numérique et le message textuel correspondant.

10. Procédé selon l'une quelconque des revendications précédentes,
**caractérisé en ce que**, lors de la transmission d'au moins une valeur numérique dudit moyen d'interface (3) vers ledit dispositif (2), à l'étape d) :
- si aucune anomalie n'a été détectée à l'étape c), ledit dispositif (2) convertit automatiquement ledit message textuel transmis en une valeur numérique correspondante ;
- sinon, il renvoie un message textuel au moyen d'interface (3), destiné à avertir un opérateur de l'anomalie.

11. Procédé selon l'une quelconque des revendications 1 à 5,
**caractérisé en ce que**, pour transmettre au moins une valeur numérique dudit moyen d'interface (3) vers ledit dispositif (2) :
- un opérateur entre la valeur numérique dans le moyen d'interface (3) et ledit moyen d'interface (3) calcule le message textuel correspondant ;
- ledit moyen d'interface (3) transmet ce message textuel au dispositif (2) ;
- ledit dispositif (2) analyse ledit message textuel transmis ; et
- si ledit dispositif (2) ne détecte aucune anomalie, il envoie un message de validation audit moyen d'interface (3) qui l'affiche.

12. Procédé selon l'une quelconque des revendications 1 à 5,
**caractérisé en ce que**, pour transmettre au moins une valeur numérique dudit moyen d'interface (3) vers ledit dispositif (2) :
- un opérateur entre la valeur numérique dans le moyen d'interface (3) qui la transmet au dispositif (2) ;
- ledit dispositif (2) calcule le message textuel correspondant à la valeur numérique reçue ;
- ledit dispositif (2) transmet ce message textuel au moyen d'interface (3) qui l'affiche ; et
- si le message textuel affiché correspond à la valeur numérique entrée initialement par l'opérateur, ce dernier effectue une opération de validation destinée à informer ledit dispositif (2) que la valeur numérique reçue est correcte.

13. Procédé selon l'une quelconque des revendications précédentes,
**caractérisé en ce que**, pour transmettre ledit message textuel à l'étape b) :
b1) on code ledit message textuel en un message numérique correspondant;
b2) on transmet ledit message numérique, par l'intermédiaire de ladite liaison de transmission de données (4) de type numérique ; et
b3) on décode le message numérique ainsi transmis pour former ledit message textuel transmis.

14. Procédé selon l'une quelconque des revendications 1 à 13,
**caractérisé en ce que**, pour former le message textuel correspondant à ladite valeur numérique, on transforme chaque chiffre de ladite valeur numérique individuellement en un équivalent textuel, le message textuel correspondant alors à la suite desdits équivalents textuels.

15. Procédé selon l'une quelconque des revendications 1 à 13,
**caractérisé en ce que**, pour former le message textuel correspondant à ladite valeur numérique, on transforme ladite valeur numérique dans son ensemble en un équivalent textuel qui représente alors ledit message textuel.

16. Système de transmission de données pour un aéronef, ledit système (1) comportant :
- au moins un dispositif (2) de type avionique ;
- au moins un moyen d'interface (3) à la disposition d'un opérateur ; et
- au moins une liaison de transmission de données (4) susceptible de relier ensemble ledit dispositif (2) et ledit moyen d'interface (3),
**caractérisé en ce que** ledit dispositif (2) et ledit moyen d'interface (3) sont formés pour transmettre toute valeur numérique sous forme d'un message textuel correspondant, et **en ce que** ledit dispositif (2) comporte au moins un moyen (9) pour réaliser automatiquement, dans les deux sens, la conversion entre une valeur numérique et le message textuel correspondant et au moins un moyen (10) pour détecter automatiquement une anomalie d'un message textuel transmis.

17. Système selon la revendication 16,
**caractérisé en ce que** ledit moyen d'interface (3) comporte un moyen d'affichage (13) et un moyen de saisie (15) de données alphanumériques.

## Claims

1. A method for transmitting data on an aircraft between at least one device (2) of avionic type and at least one interface means (3) which is available to an operator of said aircraft, said device (2) and said interface means (3) being capable of being connected together by way of at least one data transmission link (4),
**characterized in that**, in order to transmit at least one numerical value:
a) a textual message corresponding to said numerical value is formed;
b) said textual message is transmitted by way of said data transmission link (4);
c) said textual message transmitted is analyzed so as to detect any anomaly of said textual message transmitted; and
d) unless an anomaly is detected in step c), said textual message transmitted is processed.

2. The method as claimed in claim 1,
**characterized in that**, in order to transmit at least one numerical value from said device (2) to said interface means (3), said device (2) automatically computes, in step a), the textual message corresponding to said numerical value.

3. The method as claimed in one of claims 1 and 2,
**characterized in that**, during the transmission of at least one numerical value from said device (2) to said interface means (3), said interface means (3) displays as it stands at step d) said textual message transmitted.

4. The method as claimed in claim 3,
**characterized in that** the operator must perform a validation operation if he has received this textual message correctly.

5. The method as claimed in one of claims 1 to 4,
**characterized in that**, during the transmission of at least one numerical value from said device (2) to said interface means (3), said interface means (3) automatically analyzes, in step c), said textual message transmitted and, if it detects an anomaly in this step c), it displays an error message in step d).

6. The method as claimed in any one of claims 1 to 5,
**characterized in that**, in order to transmit at least one numerical value from said interface means (3) to said device (2), in step a), an operator enters said textual message directly into said interface means (3).

7. The method as claimed in any one of claims 1 to 5,
**characterized in that**, in order to transmit at least one numerical value from said interface means (3) to said device (2), in step a):
- an operator enters said numerical value into said interface means (3);
- said interface means (3) displays the corresponding textual message which it proposes to transmit; and
- said operator must perform a validation operation in order for said interface means (3) to transmit this textual message.

8. The method as claimed in any one of claims 1 to 5,
**characterized in that**, in order to transmit at least one numerical value from said interface means (3) to said device (2), in step a):
α) said interface means (3) displays a dispatch order from the operator, relating to the dispatch of said numerical value;
β) the operator is invited to validate or to cancel this order; and
γ) if he validates the order, he is invited to enter a confirmation value and to confirm this entry so that the order is dispatched.

9. The method as claimed in claim 8,
**characterized in that**, in step α), the interface means displays, as regards the dispatch order, simultaneously the numerical value and the corresponding textual message.

10. The method as claimed in any one of the preceding claims,
**characterized in that**, during the transmission of at least one numerical value from said interface means (3) to said device (2), in step d):
- if no anomaly has been detected in step c), said device (2) automatically converts said textual message transmitted into a corresponding numerical value;
- otherwise, it returns a textual message to the interface means (3), intended to advise an operator of the anomaly.

11. The method as claimed in any one of claims 1 to 5,
**characterized in that**, in order to transmit at least one numerical value from said interface means (3) to said device (2):
- an operator inputs the numerical value into the interface means (3) and said interface means (3) computes the corresponding textual message;
- said interface means (3) transmits this textual message to the device (2);
- said device (2) analyzes said textual message transmitted; and
- if said device (2) does not detect any anomaly, it sends a validation message to said interface means (3) which displays it.

12. The method as claimed in any one of claims 1 to 5,
**characterized in that**, in order to transmit at least one numerical value from said interface means (3) to said device (2):
- an operator inputs the numerical value into the interface means (3) which transmits it to the device (2);
- said device (2) computes the textual message corresponding to the numerical value received;
- said device (2) transmits this textual message to the interface means (3) which displays it; and
- if the textual message displayed corresponds to the numerical value input initially by the operator, the latter performs a validation operation intended to inform said device (2) that the numerical value received is correct.

13. The method as claimed in any one of the preceding claims,
**characterized in that**, in order to transmit said textual message in step b):
b1) said textual message is coded as a corresponding digital message;
b2) said digital message is transmitted by way of said data transmission link (4) of digital type; and
b3) the digital message thus transmitted is decoded to form said textual message transmitted.

14. The method as claimed in any one of claims 1 to 13,
**characterized in that**, in order to form the textual message corresponding to said numerical value, each digit of said numerical value is transformed individually into a textual equivalent, the textual message then corresponding to the string of said textual equivalents.

15. The method as claimed in any one of claims 1 to 13,
**characterized in that**, in order to form the textual message corresponding to said numerical value, said numerical value is transformed as a whole into a textual equivalent which then represents said textual message.

16. A data transmission system for an aircraft, said system (1) comprising:
- at least one device (2) of avionic type;
- at least one interface means (3) available to an operator; and
- at least one data transmission link (4) capable of connecting together said device (2) and said interface means (3),
**characterized in that** said device (2) and said interface means (3) are formed so as to transmit any numerical value in the form of a corresponding textual message, and **in that** said device (2) comprises at least one means (9) for automatically carrying out, in both directions, the conversion between a numerical value and the corresponding textual message and at least one means (10) for automatically detecting an anomaly of a textual message transmitted.

17. The system as claimed in claim 16,
**characterized in that** said interface means (3) comprises a means of display (13) and a means of entry (15) of alphanumeric data.

## Patentansprüche

1. Verfahren zur Datenübertragung in einem Flugzeug zwischen mindestens einer Einrichtung (2) avionischer Art und mindestens einem Schnittstellenmittel (3), das einer Bedienperson des Flugzeugs zur Verfügung steht, wobei die Einrichtung (2) und das Schnittstellenmittel (3) über mindestens eine Datenübertragungsverbindung (4) miteinander verbindbar sind,
**dadurch gekennzeichnet, dass** zur Übertragung mindestens eines Zahlenwerts:
a) eine dem Zahlenwert entsprechende Textnachricht gebildet wird;
b) die Textnachricht über die Datenübertragungsverbindung (4) übertragen wird;
c) die übertragene Textnachricht zur Erkennung einer gegebenenfalls vorhandenen Anomalie der übertragenen Textnachricht analysiert wird und
d) zumindest wenn in Schritt c) keine Anomalie erkannt wird, die übertragene Textnachricht verarbeitet wird.

2. Verfahren nach Anspruch 1,
**dadurch gekennzeichnet, dass** die Einrichtung (2) zur Übertragung mindestens eines Zahlenwerts von der Einrichtung (2) zu dem Schnittstellenmittel (3) in Schritt a) die dem Zahlenwert entsprechende Textnachricht automatisch berechnet.

3. Verfahren nach Anspruche 1 oder 2,
**dadurch gekennzeichnet, dass** das Schnittstellenmittel (3) bei der Übertragung mindestens eines Zahlenwerts von der Einrichtung (2) zu dem Schnittstellenmittel (3) in Schritt d) die übertragene Textnachricht unverändert anzeigt.

4. Verfahren nach Anspruch 3,
**dadurch gekennzeichnet, dass** die Bedienperson einen Validierungsvorgang ausführen muss, wenn sie diese Textnachricht korrekt empfangen hat.

5. Verfahren nach einem der Ansprüche 1 bis 4,
**dadurch gekennzeichnet, dass** das Schnittstellenmittel (3) bei der Übertragung mindestens eines Zahlenwerts von der Einrichtung (2) zu dem Schnittstellenmittel (3) in Schritt c) die übertragene Textnachricht automatisch analysiert und, wenn es in diesem Schritt c) eine Anomalie erkennt, in Schritt d) eine Fehlermeldung anzeigt.

6. Verfahren nach einem der Ansprüche 1 bis 5,
**dadurch gekennzeichnet, dass** eine Bedienperson zur Übertragung mindestens eines Zahlenwerts von dem Schnittstellenmittel (3) zu der Einrichtung (2) in Schritt a) die Textnachricht direkt in das Schnittstellenmittel (3) eingibt.

7. Verfahren nach einem der Ansprüche 1 bis 5,
**dadurch gekennzeichnet, dass** zur Übertragung mindestens eines Zahlenwerts von dem Schnittstellenmittel (3) zu der Einrichtung (2) in Schritt a):
- eine Bedienperson den Zahlenwert in das Schnittstellenmittel (3) eingibt;
- das Schnittstellenmittel (3) die entsprechende Textnachricht, die zu übertragen es vorhat, anzeigt und
- die Bedienperson einen Validierungsvorgang ausführen muss, damit das Schnittstellenmittel (3) diese Textnachricht überträgt.

8. Verfahren nach einem der Ansprüche 1 bis 5,
**dadurch gekennzeichnet, dass** zur Übertragung mindestens eines Zahlenwerts von dem Schnittstellenmittel (3) zu der Einrichtung (2) in Schritt a):
α) das Schnittstellenmittel (3) einen auf den Versand des Zahlenwerts bezogenen Sendebefehl der Bedienperson anzeigt,
β) die Bedienperson aufgefordert wird, diesen Befehl zu validieren oder aufzuheben und
y) wenn sie den Befehl validiert, die Bedienperson aufgefordert wird, einen Bestätigungswert einzugeben und diese Eingabe zu bestätigen, damit der Befehl gesendet wird.

9. Verfahren nach Anspruch 8,
**dadurch gekennzeichnet, dass** in Schritt α) das Schnittstellenmittel in Bezug auf den Sendebefehl gleichzeitig den Zahlenwert und die entsprechende Textnachricht anzeigt.

10. Verfahren nach einem der vorhergehenden Ansprüche,
**dadurch gekennzeichnet, dass** bei der Übertragung mindestens eines Zahlenwerts von dem Schnittstellenmittel (3) zu der Einrichtung (2) in Schritt d):
- die Einrichtung (2), wenn in Schritt c) keine Anomalie erkannt wurde, die übertragene Textnachricht automatisch in einen entsprechenden Zahlenwert konvertiert
- sie andernfalls eine Textnachricht an das Schnittstellenmittel (3) zurücksendet, um einer Bedienperson die Anomalie zu melden.

11. Verfahren nach einem der Ansprüche 1 bis 5,
**dadurch gekennzeichnet, dass** zur Übertragung mindestens eines Zahlenwerts von dem Schnittstellenmittel (3) zu der Einrichtung (2):
- eine Bedienperson den Zahlenwert in das Schnittstellenmittel (3) eingibt und das Schnittstellenmittel (3) die entsprechende Textnachricht berechnet,
- das Schnittstellenmittel (3) diese Textnachricht an die Einrichtung (2) überträgt,
- die Einrichtung (2) die übertragene Textnachricht analysiert und
- wenn die Einrichtung (2) keine Anomalie erkennt, sie eine Validierungsnachricht an das Schnittstellenmittel (3) sendet, welche diese anzeigt.

12. Verfahren nach einem der Ansprüche 1 bis 5,
**dadurch gekennzeichnet, dass** zur Übertragung mindestens eines Zahlenwerts von dem Schnittstellenmittel (3) zu der Einrichtung (2):
- eine Bedienperson den Zahlenwert in das Schnittstellenmittel (3) eingibt, das diesen an die Einrichtung (2) überträgt,
- die Einrichtung (2) die dem empfangenen Zahlenwert entsprechende Textnachricht berechnet;
- die Einrichtung (2) diese Textnachricht zu dem Schnittstellenmittel (3) überträgt, welche diese anzeigt und
- wenn die angezeigte Textnachricht dem anfänglich von der Bedienperson eingegebenen Zahlenwert entspricht, Letztere einen Validierungsvorgang ausführt, der dazu vorgesehen ist, die Einrichtung (2) zu informieren, dass der empfangene Zahlenwert korrekt ist.

13. Verfahren nach einem der vorhergehenden Ansprüche,
**dadurch gekennzeichnet, dass** zur Übertragung der Textnachricht, in Schritt b):
b1) die Textnachricht in eine entsprechende digitale Nachricht codiert wird,
b2) die digitale Nachricht über die Datenübertragungsverbindung (4) digitaler Art übertragen wird und
b3) die auf diese Weise übertragene digitale Nachricht zur Bildung der übertragenen Textnachricht decodiert wird.

14. Verfahren nach einem der Ansprüche 1 bis 13,
**dadurch gekennzeichnet, dass** zur Bildung der dem Zahlenwert entsprechenden Textnachricht jede Ziffer des Zahlenwerts einzeln in ein Textäquivalent transformiert wird, so dass die Textnachricht dann der Folge der Textäquivalente entspricht.

15. Verfahren nach einem der Ansprüche 1 bis 13,
**dadurch gekennzeichnet, dass** zur Bildung der dem Zahlenwert entsprechenden Textnachricht, der Zahlenwert als Ganzer in ein Textäquivalent, das dann die Textnachricht repräsentiert, transformiert wird.

16. Datenübertragungssystem für ein Flugzeug, wobei das System (1) umfasst:
- mindestens eine Einrichtung (2) avionischer Art,
- mindestens ein Schnittstellenmittel (3), das einer Bedienperson zur Verfügung steht, und
- mindestens eine Datenübertragungsverbindung (4), die geeignet ist, die Einrichtung (2) und das Schnittstellenmittel (3) miteinander zu verbinden,
**dadurch gekennzeichnet, dass** die Einrichtung (2) und das Schnittstellenmittel (3) dazu ausgebildet sind, jeden Zahlenwert in Form einer entsprechenden Textnachricht zu übertragen und **dadurch**, dass die Einrichtung (2) mindestens ein Mittel (9) zur automatischen Durchführung der Umwandlung in beiden Richtungen zwischen einem Zahlenwert und der entsprechenden Textnachricht umfasst und mindestens ein Mittel (10) zur automatischen Erkennung einer Anomalie einer übertragenen Textnachricht.

17. System nach Anspruch 16,
**dadurch gekennzeichnet, dass** das Schnittstellenmittel (3) ein Anzeigemittel (13) und ein Eingabemittel (15) für alphanumerische Daten umfasst.
